# EUROPEAN PATENT APPLICATION

(11) **EP 2 409 869 A2**
(43) Date of publication of application: **25.01.2012**
(21) Application number: 11174767.1
(22) Date of filing: 20.07.2011
(51) Int. Cl.: B60J 7/10, B60J 7/12

(54) **Bellows to lift the flexible roof of the loading space of a freight vehicle**

(30) Priority: 20.07.2010 NL 2005117; 23.07.2010 NL 2005144
(71) Applicant: Sioen Industries NV, 8850 Ardooie (BE)
(72) Inventor: Claeys, Gabriël, 8850 Ardooie (BE)
(74) Representative: Assendelft, Jacobus H.W.

(57) **Abstract**

System to lift the roof, of roof foil (5), of the with a flexible sheet covered loading space of a freight vehicle by inflating a bellows (6) having a multi layer wall. At least one of the layers is provided by an envelope into which the bellows is housed, and the bellows is separate from the envelope and is inserted into the envelope. The roof foil (5) provides part of the wall of the envelope, such that the envelope is integrated with the roof foil. The envelope is substantially sealed along its length and has an opening at one or both its longitudinal ends for insertion of the bellows (6).

## Description

This invention relates to a system to using inflation of a bellows or such inflatable object to lift the roof of flexible sheet of a space to put said foil like roof temporary in a desired slanting position for removing water, snow or ice, or avoiding the collection of it. Thus a bellows design for a system to lift the roof of the with a flexible sheet covered loading space of a freight vehicle by inflating a bellows Prior art examples are e.g. disclosed in WO2005065975A1, EP 0897827 or SE468279B and comprise e.g. a pneumatic hose or bellows e.g. extending across the length of the loading space closely below the roof. Such foil like roof is supported by mutually spaced cross rods resting on the opposite sidewalls of the space, such that the roof foil can sag between de cross rods / cross beams such that water, snow or ice can collect.

This problem is particularly relevant with freight vehicles. During stand still water can collect onto the sheet which can freeze to ice plates. During riding such ice plates can drop from the sheet and onto passing cars. By putting with the aid of an inflatable device the roof in a slanting position during stand still, one can prevent that water collects on top of the roof. By providing that during riding the device is deflated, the roof remains below the maximum travelling height. The advantage of having a foil roof is the ability to repeatedly collapse/retract and unfold/extend the roof, such that loading and unloading can be carried out with collapsed roof, enabling more freedom of manoeuvrability.

Such a system is operated by low pressure (typically below 1 or 0.5 bar overpressure relative to the environmental atmospheric pressure) pneumatic air, e.g. approximately 300 litres of 0.3 bar is needed for complete inflation, which is supplied by e.g. the pneumatic brake system or the air suspension of the vehicle, typically operating at pressures above 5 bar overpressure, e.g. approximately 10 bar. Times for complete inflation and deflation should be as short as possible, typically shorter then 2 minutes, for convenience of the truck driver. To meet this requirement, it is typical to have both a positive inflation (air source) and deflation (air drain). Positive deflation is typically provided by a preferably pneumatic driven suction pump, e.g. of venturi type (also known as ejector or vacuum ejector pump), an example of which is disclosed in WO9949216A1 (multi stage type, e.g. 2 or 3 staged is preferred).

Several applications of the system are feasible, particularly in or on a freight vehicle.

The object of the invention is a cheap and easy to install and maintain, robust, weather insensitive and wear resistant system with a minimum number of parts and reliable operation. The inventor has determined that the durability, particularly the air tightness, of the bellows is crucial to the reliable operation and durability of the system, in particular if used for a foil roof which is frequently folded open. The unobstructed connection between the bellows and the inflation and deflation source can also be crucial

Thus the invention provides a system according to the claims below.

Thus, the bellows has a multi layer wall, e.g. the wall comprises a first gas tight layer and a second mechanical resistant layer as a reinforcement for the first layer. In this manner the permeability to gas can be limited to a minimum while the strength, e.g. burst strength and/or puncture resistance, can be maximized. The wall could comprise more than two layers, e.g. three or four or more than four. This wall of the bellows provides the enclosure to be filled with the fluid for inflating the bellows, i.e. provides the circumferential wall. The layers are foil or sheet type.

In a preferred embodiment at least one layer of the wall of the bellows is provided by an envelope of foil type material. Thus the bellows can easily be inserted into the envelope, e.g. by threading it from the one longitudinal end to the opposite longitudinal end of the envelope. The envelope offers both protection and fixation to the bellows. With the envelope the mounting is evenly spread along the length of the bellows.

By surprise it has come out that the envelope is not only advantageous for the reliability and durability of the air tube, but also for the foil of the roof since such roof provided with the envelope of the invention will more easily collapse/fold and extend/unfold, since this process is aided by the envelope, in particular if the envelope is integrated with the roof foil. However also different mounting types provide such advantage, e.g. a separate self contained envelope mounted to the roof foil by e.g. straps or adhered/welded/sealed to it. The best seems if a plurality of longitudinally of the roof spaced, crosswise extending envelopes, each for containing an associated cross bellows, is applied, preferably each envelope at a relevant cross rod. The envelope can locally have one or more openings, e.g. for the passage of connections to the gas source and drain or for inserting and removing the bellows.

The envelope is preferably made of sheet typically used for the foil of the roof, e.g. PVC coated/impregnated fibre fabric (net, braid, woven, non-woven, etc.). Preferably the envelope is obtained by spreading a strip of foil, preferably flat, on the foil of the roof and fixing, e.g. adhering or sealing or welding, the longitudinal edges of the strip to the roof foil, such that between the mounted edges of the strip the envelope is provided, the one side of which is provided by the foil roof, the opposite side by the foil strip. Thus, between the mounted longitudinal strip edges the strip and the roof foil are separate superimposed or stacked or loose laminated strip like items which can be moved apart to allow to be repeatedly moved between a collapsed flat shape, mutually stacked, and an expanded spatial shape e.g. resembling a completely inflated pneumatic hose.

The envelope shape is preferably adapted to the shape of the bellows such that the bellows tightly fits in the envelope in the completely deflated and/or completely inflated state of the bellows.

The bellows has preferably one or more of the following features: is air tight; is hose or pad like; is made of a sheath or annular or radial wall of a single or a multitude (preferably laminated to be mutually adhered/sealed across their complete surface) of material layers of which preferably a layer is a gas tight sheet or foil and/or a layer is a load bearing sheet or foil, preferably protecting the gas tight foil and preferably covering the gas tight foil on the outside; a layer, e.g. the gas tight layer, is made from polyurethane, preferably polyurethane elastomere, preferably having a Shore A hardness between 80 and 90, such as 87; a layer is made from a fibre fabric (net, braid, woven, non-woven, etc.), e.g. impregnated with a matrix such as PVC; a layer is a polymer or elastomere cladded with metal; substantially all the fibres of a layer have a strength of at least 2,000 N/mm2 (Newton per square millimetre) and/or a break yield of at least 10% or 15%; its longitudinal ends are sealed; contains between its ends, preferably approximately halfway its length, at least one, preferably two next to each other located air connections; has, if completely inflated, a regular shape, e.g. substantially parallelepiped or prismatic shape or a irregular shape e.g. with, varying width and/or height along its length, preferably continuously decreasing width and/or height from a location halfway the length towards each longitudinal end, e.g. substantially triangular or gable top like with the summit halfway the length and from there the upper face slopes downward towards both longitudinal ends like an inclined roof, while its lower face preferably extends in a single plane, horizontal in the operating position, thus high in the middle and low at the opposite ends and continuously increasing in height in between; the envelope extends substantially the complete length of the bellows; the bellows is air tight at all sides; the envelope is not air tight; the bellows and envelope are mutually fixed only at their longitudinal ends.

With a multi layer sheath for the bellows the optimum combination of gas tightness and wear resistance is obtained and also the durable connection to the air supply and drain is improved.

The system can apply a single bellows or a bellows assembly with a single or a plurality of separate air chambers. In case a bellows extends in the length of the roof, thus covering a plurality of coss rods, there can be a single air chamber in the bellows, extending the complete length, or a plurality of air chambers extending parallel or one after the other. As an alternative there can be a plurality of mutually parallel and spaced cross bellows, e.g. one at each cross rod, each having a single or plurality of air chambers.

The bellows can be provided with an air connection for connection with the air or gas source or drain. The one or more spaced parallel bellows can extend longitudinally or in cross direction, e.g. each cross rod carries a cross bellows on its top, or one or more longitudinal bellows are carried on top of several succeeding or all cross rods.

Preferably an air tube extending at short distance along, preferably below, the roof sheet, having along its length one or a plurality of air connections to the bellow or assembly of bellows for lifting the roof sheet, provides the connection of the bellows to the air source and/or drain of the system.

The air tube preferably has an inner diameter much smaller than that of the bellows, e.g. not more than 10 or 20% of it, or e.g. not more than 15 or 30 or 50 or 100 millimetre and preferably at least 3 or 5 millimetre. Its wall thickness is preferably at least 0.5 millimetre and preferably not more then 2 or 3 millimetre, e.g. approximately 1.0 or 1.25 or 1.5 millimetre. The air tube is preferably made of Polyurethane. It preferably has a hardness Shore A between 90 and 100, e.g. approximately 98. For substantially the complete length of the roof where the roof and the air tube co-extend, the distance between the air tube and the foil roof , at completely deflated bellows and completely extended (closed) roof, is less then 3 or 5 or 10 or 20 centimetre. The diameter of the bellows is e.g. between 50 and 200 millimetre. The diameter of a top gable shaped bellows is e.g. approximately twice as high in the centre compared to the longitudinal ends, e.g. approximately 160 millimetre in the centre and approximately 85 millimetre at the ends.

Below the invention is illustrated by way of non-limiting
embodiments, shown in the pictures.
Fig. 1 and 2 show a cross section of a freight vehicle;
Fig. 3A and 3B show a cross section;
Fig. 4 - 14 show photographs of a freight vehicle

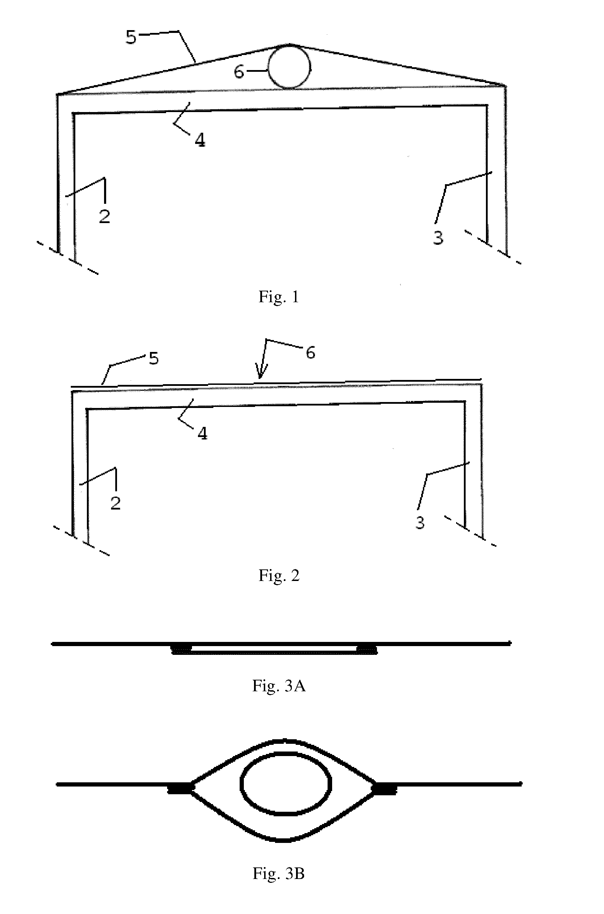

Fig. 1 shows side walls 2 and 3 supporting the cross rod 4 above which foil roof 5 lifted by completely inflated bellows 6. The direction of view is in the longitudinal direction of the roof 5.

Fig. 2 shows the same as fig. 1, however the bellows 6 is deflated, so the roof 5 rests flat onto the cross rods 4. The bellows 6 extends the complete length of the roof 5 and is supported by all cross rods 4.

Fig. 3A shows schematically an embodiment of the envelope to contain a bellows. The top horizontal line indicates the flat roof foil. A flat foil strip is indicated by the bottom line, both edges of which are sealed to the roof foil. Between the edges the foil strip and roof foil do not adhere.

Fig. 3B shows schematically the envelope of fig. 3A expanded and a bellows added. Inside the envelope the expanded bellows is illustrated, which causes the expansion of the envelope. For both fig. 3A and 3B the parts are drawn at a mutual distance for clarity, while in practice they will have mutual surface contact.

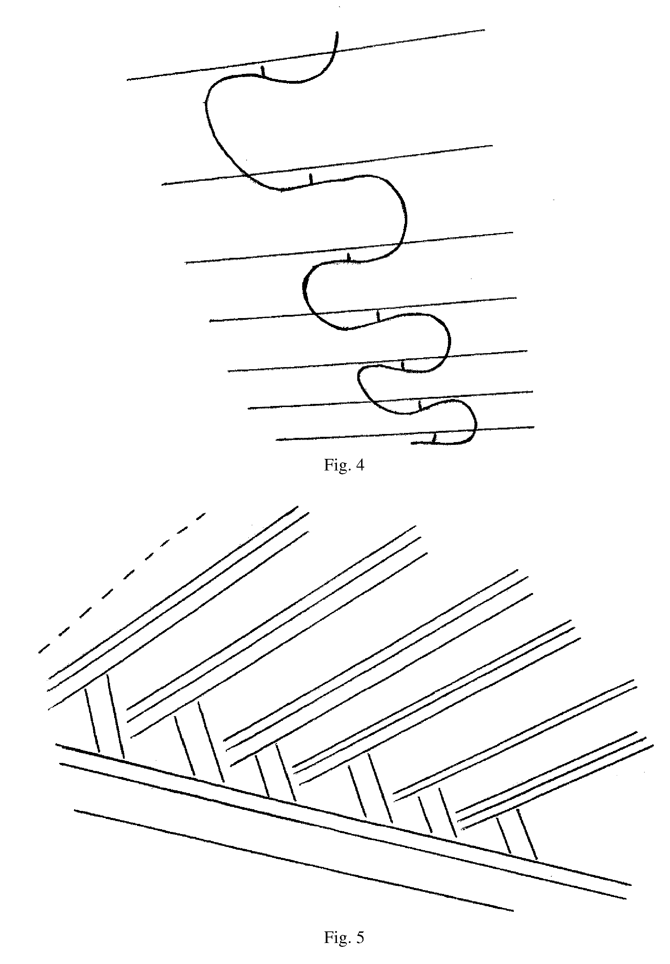

Fig. 4 shows a picture taken inside the freight space, showing the upright side walls and the under side of the foil roof resting at the regular spaced cross rods. The black serpentine line is the air tube. A longitudinal extending bellows is absent. In stead, a cross bellows extends on top of each cross rod, such that the air tube is connected to a plurality of spaced air chambers of the bellows. In this picture the cross bellows are inflated, providing a gable top or triangle shape with highest point in line with the longitudinal centre line of the roof, such that the centre of the roof is highest lifted and inclines to each side while continuously supported along the length of each cross rod. The air tube is continuous along its length and has spaced air connections along its length. Each cross bellows is tightly fitting housed in an associated envelope.

Fig. 5 shows how the roof is folded by shifting the cross rods, resting on top of the sides, towards each other, while the foil folds itself.

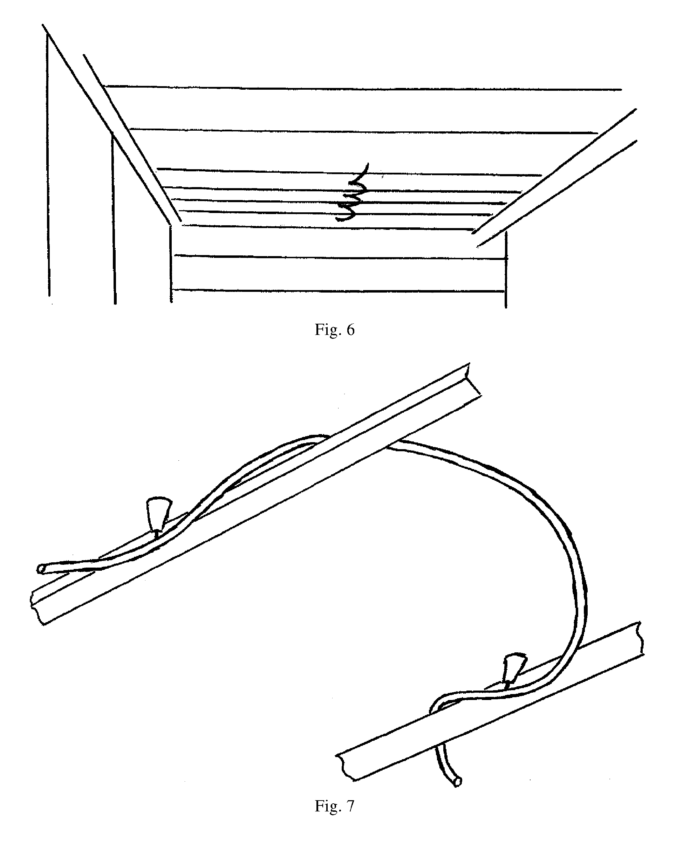

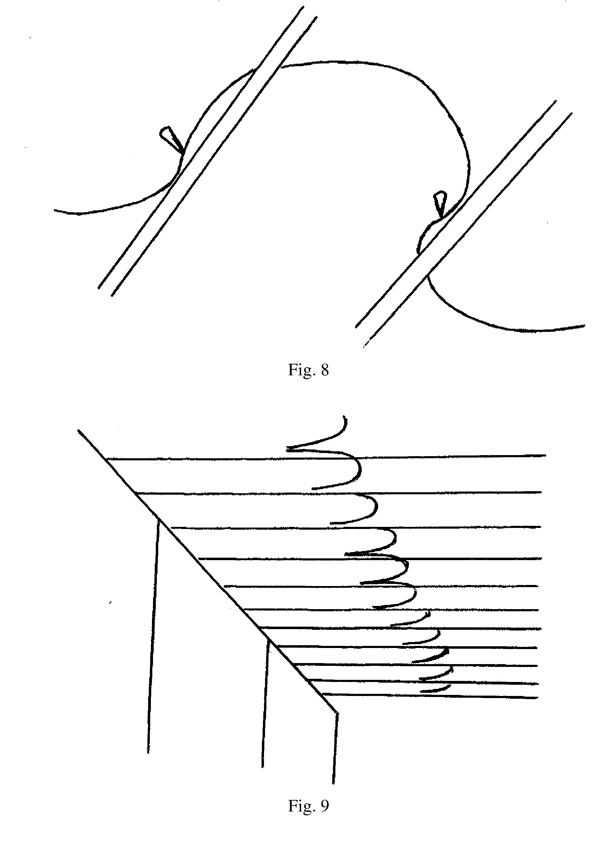

Fig. 6 shows the partly folded open roof. Fig. 7 shows a detail of fig. 4 illustrating two successive cross rods and on top of each an envelope integrated with the roof foil. Also visible are the edges of the two foil strips, sealed to the roof foil, and a single hole in each envelope penetrated by an associated air connection of the bellows housed in the envelope. Fig. 8 is a view similar to fig. 7.

Fig. 9 is a view similar to fig. 4, the only main difference being a different courseof the air tube.

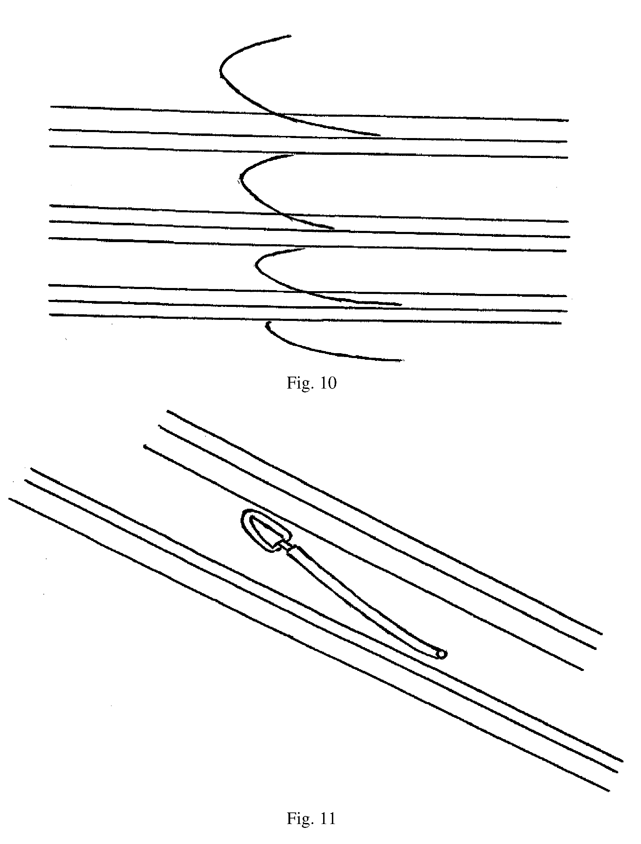

Fig. 10 shows a detail of fig. 9. The gable top shape of the inflated cross bellows inside the envelopes on top of each cross rod is presented as the darker areas.

Fig. 11 shows the embodiment of fig. 9 if the roof is collapsed by bringing the cross rods close to each other. The two air connections for each cross bellows are visible.

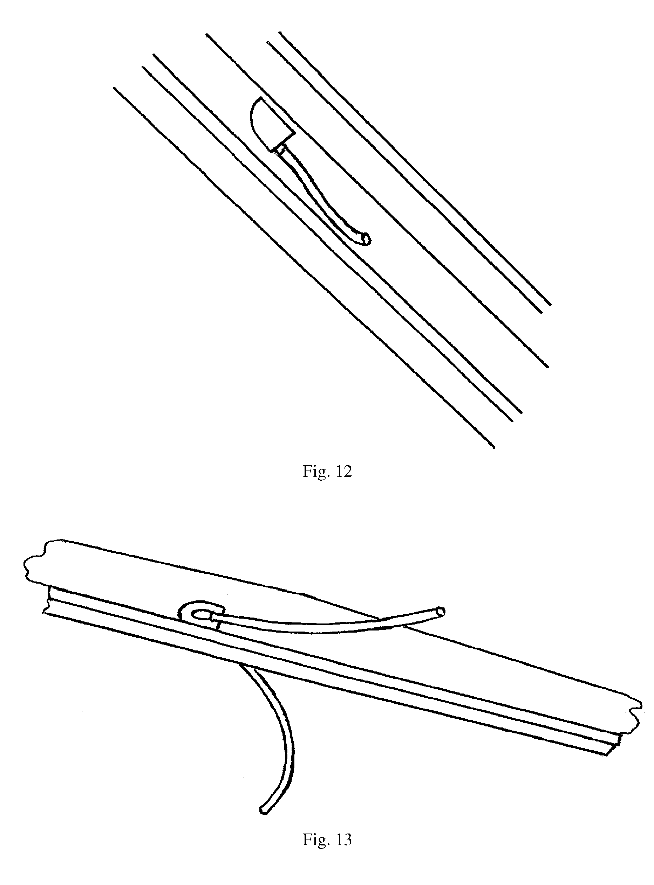

Fig. 12 shows the roof of fig. 9 in a more collapsed condition compared to fig. 11.

Fig. 13 shows a detail of fig. 9, the air connections have connection pipes extending parallel to the roof foil, such that the air tubes connect to the air connections in a parallel manner.

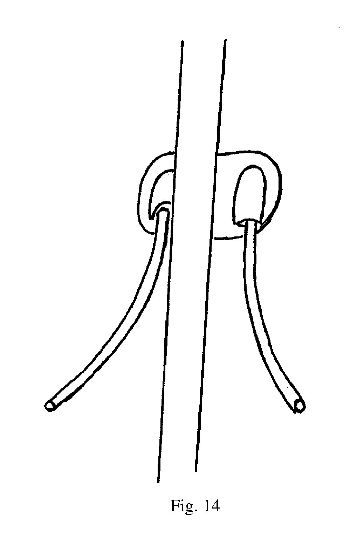

Fig. 14 is similar to fig. 13 and gives a clear view of the envelope with cross bellows on top of the cross rod and the two air connections and part of the associated two length parts of the air tube. The sealed edges of the foil strip are also visible.

Other versions belong to the invention. All described or shown in the drawing features are in themselves or in any combination the subject of this invention, even independently of their combination in the claims or their reference

## Claims

1. System to lift the roof, of roof foil, of the with a flexible sheet covered loading space of a freight vehicle by inflating a bellows having a multi layer wall, e.g. the wall comprises a first gas tight layer and a second mechanical resistant layer as a reinforcement for the first layer, which wall provides the enclosure to be filled with the fluid for inflating the bellows, which bellows preferably is fixed to the roof foil.

2. System according to claim 1, wherein at least one of the layers is provided by an envelope into which the bellows is housed, preferably wherein the bellows is separate from the envelope and is inserted into the envelope.

3. System according to claim 1, wherein the roof foil provides part of the wall of the envelope, such that the envelope is integrated with the roof foil.

4. System according to claim 1, 2 or 3, wherein the envelope is substantially sealed along its length and has an opening at one or both its longitudinal ends for insertion of the bellows, and/or wherein the bellows is inserted into the envelope in the longitudinal direction of the envelope.

5. System according to any of claims 1-4, wherein the bellows is connected to a system, inboard the vehicle, for filling and exhausting the bellows with fluid, preferably air, to inflate and deflate it.

6. System according to any of claims 1-5, wherein the bellows and envelope are supported by the roof supporting structure of the vehicle.

7. System according to any of claims 1-6, wherein the bellows is designed to move the roof foil between a substantially flat roof shape for minimum vehicle height and an inclined roof shape for draining ice and rain water from the roof.

8. System according to any of claims 1-7, wherein the bellows or envelope as inflated has a decreasing height or tapered shape towards one or both its longitudinal ends, preferably from a maximum halfway its length, particularly decreases in cross sectional area towards one or both its longitudinal ends.

9. System according to any of claims 1-8, wherein the envelope is provided by fixing, preferably by sealing or adhering, both the longitudinal sides of a foil strip to the roof foil, preferably by laminating said sides to the roof foil.

10. System according to any of claims 1-9, wherein the bellows, in its inflated condition, tightly fits within the envelope.
